(19) Europäisches Patentamt
European Patent Office
Office européen des brevets

(11) **EP 4 199 233 A2**

(12) **EUROPEAN PATENT APPLICATION**

(43) Date of publication:
**21.06.2023 Bulletin 2023/25**

(21) Application number: **22213289.6**

(22) Date of filing: **13.12.2022**

(51) International Patent Classification (IPC):
**H01M 50/446** (2021.01)    **H01M 10/052** (2010.01)
**H01M 50/403** (2021.01)    **H01M 50/414** (2021.01)
**H01M 50/417** (2021.01)    **H01M 50/426** (2021.01)
**H01M 50/434** (2021.01)    **H01M 50/449** (2021.01)

(52) Cooperative Patent Classification (CPC):
**H01M 50/446; H01M 10/052; H01M 50/403;
H01M 50/414; H01M 50/417; H01M 50/426;
H01M 50/434; H01M 50/449**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2021 KR 20210178418**

(71) Applicant: **SK On Co., Ltd.**
**Seoul 03161 (KR)**

(72) Inventors:
• **HWANG, Chang Mook**
**34124 Daejeon (KR)**
• **NAM, Yae Seol**
**34124 Daejeon (KR)**
• **LEE, Jong Hyeok**
**34124 Daejeon (KR)**
• **JO, Yoon Ji**
**34124 Daejeon (KR)**

(74) Representative: **Stolmár & Partner**
**Patentanwälte PartG mbB**
**Blumenstraße 17**
**80331 München (DE)**

(54) **SEPARATOR FOR SECONDARY BATTERY, METHOD OF MANUFACTURING THE SAME, AND SECONDARY BATTERY INCLUDING THE SAME**

(57) Exemplary embodiments of the present disclosure provide a separator for a secondary battery, capable of preventing heat from transferring to an adjacent region in an electrode even when non-ideal heat is generated by an electrode active material, a trigger point of thermal runaway.

A separator for a secondary battery according to the present disclosure includes a porous polymer substrate and a ceramic layer provided on at least one surface of the porous polymer substrate. The ceramic layer includes a ceramic composite. The ceramic composite includes a hollow portion, a ceramic shell surrounding the hollow portion, and a doping material dispersed in the ceramic shell. The hollow portion is in a vacuum state.

FIG. 1

## Description

### FIELD

The present disclosure relates to a separator for a secondary battery, a method of manufacturing the same, and a secondary battery including the same.

### BACKGROUND

A mobile information terminal such as a cell phone, a laptop computer, a smartphone, but is not limited thereto, has used a lithium secondary battery having high energy density and easy portability as a driving power source. In addition, research into the use of a lithium secondary battery as a driving power source for a hybrid or electric vehicle or as a power storage device using high energy density characteristics has been actively conducted. When secondary batteries are widely used for such medium and large devices, a plurality of secondary batteries are electrically connected to each other to increase capacity and output.

One of the main research tasks of such a lithium secondary battery is to improve safety of the secondary battery. For example, when thermal runaway occurs due to heat generated in a decomposition reaction of an active material, excessive current may be generated due to damage to a separator, short-circuit of positive and negative electrodes, and internal short-circuit, resulting in fire and explosion.

In addition, in the case of a medium or large device, such as an electric vehicle, in which a plurality of lithium secondary batteries are electrically connected to each other, thermal runaway occurring in a unit cell may affect adjacent unit cells, resulting in thermal runaway of the entire battery pack.

Such a thermal runaway may break the lithium secondary battery as well as cause fatal damage to users, so that urgent development related to the technology for improving safety of the lithium secondary battery is required.

### SUMMARY

An aspect of the present disclosure is to provide a separator for a secondary battery, capable of preventing heat transfer to an adjacent region in an electrode even when non-ideal heat is generated by an electrode active material, a trigger point of thermal runaway.

Another aspect of the present disclosure is to provide a method of manufacturing the separator for a secondary battery and a secondary battery including the separator for a secondary battery.

According to an aspect of the present disclosure, a separator for a secondary battery includes a porous polymer substrate and a ceramic layer provided on at least one surface of the porous polymer substrate. The ceramic layer includes a ceramic composite. The ceramic composite includes a hollow portion, a ceramic shell surrounding the hollow portion, and a doping material dispersed in the ceramic shell. The hollow portion is in a vacuum state.

The ceramic shell may include at least one ceramic material selected from the group consisting of $Al_2O_3$, $SiO_2$, $ZrO_2$, and SiC.

An average thickness of the ceramic shell may be 1 nm to 1 $\mu$m.

The doping material may include at least one selected from the group consisting of polyurethane (PU) and polytetrafluoroethylene (PTFE).

A content of the doping material may be 5 to 10 weight percentage (wt%) based on a total weight of the ceramic shell.

The ceramic shell may further include at least one curable resin selected from the group consisting of a polyester resin and a polyimide resin.

A content of the curable resin may be 1 to 15 weight percentage (wt%) based on a total weight of the ceramic shell.

The ceramic composite may have flexural strength of 10 to 20 MPa.

An average particle size of the ceramic material may be 10 nm to 5 $\mu$m.

An average thickness of the ceramic layer may be 5 to 10 $\mu$m.

The porous polymer substrate may include polyethylene (PE) or polypropylene (PP).

The ceramic layer may further include a binder having a content of 1 to 5 weight percentage (wt%) based on a total weight of the ceramic layer.

The binder may include at least one selected from the group consisting of styrene-butadiene rubber (SBR), carboxymethyl cellulose (CMC), and polyvinylidene fluoride (PVDF)

According to an aspect of the present disclosure, a method of manufacturing a separator for a secondary battery includes: thermally treating first ceramic powder at a temperature of 1800 to 2200 degrees Celsius; cooling the thermally treated first ceramic powder; mixing the cooled first ceramic powder with porous second ceramic powder or water to prepare a first mixture; pulverizing the first mixture; mixing the pulverized first mixture, a doping material, and a curable resin to prepare a second mixture; evacuating the second mixture in a vacuum; curing the second mixture, evacuated in the vacuum, at a temperature of 150 to 300 degrees Celsius to prepare a ceramic composite; and applying the ceramic composite to at least one surface of the porous polymer substrate and then drying the applied ceramic composite.

Each of the first ceramic powder and the porous second ceramic powder may include at least one selected from the group consisting of $Al_2O_3$, $SiO_2$, $ZrO_2$, and SiC.

According to an aspect of the present disclosure, a secondary battery includes: a positive electrode; a negative electrode; and the separator for a secondary battery.

## BRIEF DESCRIPTION OF DRAWINGS

The above and other aspects, features, and advantages of the present disclosure will be more clearly understood from the following detailed description, taken in conjunction with the accompanying drawing.

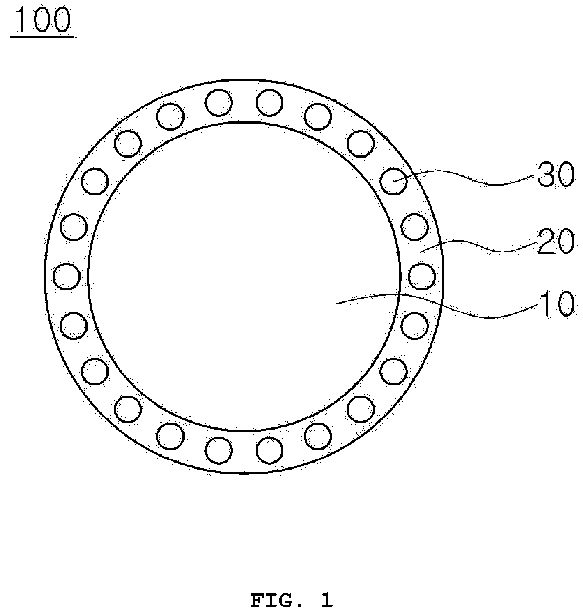

FIG. 1 is a diagram illustrating a ceramic composite according to an exemplary embodiment in the present disclosure.

## DETAILED DESCRIPTION

According to an aspect of the present disclosure, a separator for a secondary battery is provided. The separator include a porous polymer substrate and a ceramic layer provided on at least one surface of the porous polymer substrate. The ceramic layer include a ceramic composite, and the ceramic composite include a hollow portion, a ceramic shell surrounding the hollow portion, and a doping material dispersed in the ceramic cell. The hollow portion be in a vacuum state.

As illustrated in FIG. 1, the ceramic composite according to the present disclosure may have a core-shell structure in which an internal core is a hollow portion, and the hollow portion may be in a vacuum state. As described above, when the hollow portion is in a vacuum state, the ceramic composite may exhibit improved thermal insulation and thermal resistance.

The ceramic shell surrounding the hollow portion may include at least one ceramic material selected from the group consisting of $Al_2O_3$, $SiO_2$, $ZrO_2$, and SiC, but exemplary embodiments are not limited thereto. The ceramic shell may have high strength and may seal the hollow portion to maintain the vacuum of the hollow portion.

In the present disclosure, the ceramic shell may be a single-crystalline layer, and an average thickness of the ceramic shell may be, in detail, 1 nm to 1 um. When the average thickness of the ceramic shell is less than 1 nm, durability of the ceramic shell may be deteriorated to cause difficulty in maintaining a vacuum state of the hollow portion. On the other hand, when the average thickness of the ceramic shell is greater than 1 um, a relative size of the hollow portion may be reduced to deteriorate heat transfer prevention performance.

In the present disclosure, the doping material may be added to secure ductility of the ceramic composite, and may include at least one selected from the group consisting of polyurethane (PU) and polytetrafluoroethylene (PTFE), but exemplary embodiments are not limited thereto.

The doping material is dispersed in the ceramic shell, and a content of the doping material may be 5 to 10 weight percentage (wt%) based on a total weight of the ceramic shell. When the content of the doping material is less than 5 wt%, the separator may be damaged due to the low ductility of the ceramic composite. On the other hand, when the content of the doping material is greater than 10 wt%, it is not preferable because the strength of the ceramic shell may be reduced.

The ceramic shell according to the present disclosure may further include a curable resin and a curing accelerator, other than the above-described ceramic material and doping material.

The curable resin is not limited as long as it may be mixed with a ceramic material and then cured to form a ceramic shell, but may be at least one selected from the group consisting of, for example, a polyester resin and a polyimide resin.

A content of the curable resin may be 1 to 15 wt% based on the total weight of the ceramic shell. When the content of the curable resin is less than 1 wt%, insufficient curing may occur due to insufficiency of the content. On the other hand, when the content of the curable resin is greater than 15 wt%, it is not preferable because residual curable resin may cause a side reaction with an electrolyte solution.

The curing accelerator may be, for example, benzoyl peroxide, cyclohexanone peroxide, lauroyl peroxide, or a mixture thereof, but exemplary embodiments are not limited thereto. In this case, the curing accelerator may be used in a content range that does not cause a change in physical properties of the curable resin or the ceramic shell, and a content of the curing accelerator may be, in detail, 0.001 to 5 wt% based on the total weight of the ceramic shell.

The ceramic composite according to the present disclosure may have flexural strength of, in detail, 10 to 20 MPa. When the flexural strength of the ceramic composite is less than 10 MPa, it may be difficult to maintain the vacuum state of the hollow portion because the ceramic shell is damaged by an external impact. When the flexural strength of the ceramic composite is greater than 20 MPa, the electrode layer may be damaged due to significantly high strength.

To secure packing density of the ceramic layer, an average diameter of the ceramic composite may be, in detail, half or less of the average diameter of the electrode active material. For example, the average diameter of the ceramic composite may be 10 nm to 5 um. When the average diameter is less than 10 nm, efficiency of the coating process of the ceramic composite may be reduced. When the average diameter is greater than 5 um, the ceramic composite may block pores of a separator substrate to reduce porosity.

An average thickness of the ceramic layer may be 5 to 10 um. When the average thickness of the ceramic layer is less than 5 $\mu$m, it may be difficult to secure thermal stability of a battery. When the average thickness of the ceramic layer is greater than 10 $\mu$m, it is not preferable because cell capacity may be decreased and cell resistance may be increased.

In the present disclosure, the ceramic layer may further include a binder other than the above-described ceramic composite. In this case, the binder may be added such that the ceramic layer is adhered and fixed to the porous polymer substrate, and may be attached to a portion or an entirety of a surface of the ceramic composite. For example, the binder may include at least one selected from the group consisting of styrene-butadiene rubber (SBR), carboxymethyl cellulose (CMC), and polyvinylidene fluoride (PVDF), but exemplary embodiments are not limited thereto.

The content of the binder may be 1 to 5 wt% based on a total weight of the ceramic layer. When the content of the binder is less than 1 wt%, the ceramic layer may be separated from the porous polymer substrate due to insufficient adhesive strength. When the content of the binder is greater than 5 wt%, it is not preferable because the adhesive strength is not be increased any more but a volume of the ceramic composite is significantly increased.

In the present disclosure, the porous polymer substrate is not limited as long as it may be applied to a secondary battery, and may include, for example, polyethylene (PE) or polypropylene (PP) .

Next, a method of manufacturing a separator for a secondary battery according to the present disclosure will be described.

A method of manufacturing a separator for a secondary battery according to the present disclosure include thermally treating first ceramic powder at a temperature of 1800 to 2200 degrees Celsius, cooling the thermally treated first ceramic powder, mixing the cooled first ceramic powder with porous second ceramic powder or water to prepare a first mixture, pulverizing the first mixture, mixing the pulverized first mixture, a doping material, and a curable resin to prepare a second mixture, evacuating the second mixture in a vacuum, curing the second mixture, evacuated in the vacuum, at a temperature of 150 to 300 degrees Celsius to prepare a ceramic composite, and applying the ceramic composite to at least one surface of the porous polymer substrate and then drying the applied ceramic composite.

An operation of thermally treating first ceramic powder at a temperature of 1800 to 2200 degrees Celsius is performed. By thermally treating the first ceramic powder at the temperature of 1800 to 2200 degrees, the first ceramic powder may be prepared as a single crystal to secure strength of the powder. When the strength of the first ceramic powder is low, fracturing may occur due to external force such as rolling, and thus, a hollow portion in a vacuum state may not be formed.

When the thermal treatment is performed at a temperature of less than 1800 degrees Celsius, a grain boundary ceramic material may be formed to facilitate formation of pores and impurities. Therefore, the strength may be reduced to a level of 50 to 70%, as compared with a single-crystalline ceramic material. On the other hand, when the thermal treatment is performed at a temperature greater than 2200 degrees Celsius, a rate of change in a specific volume may be rapidly changed to increase the specific volume.

Next, an operation of cooling the thermally treated first ceramic powder is performed. A cooling manner is not limited, but the first ceramic powder may be poured into a mold, and then air cooling or water cooling may be performed. The cooling may be performed at a temperature of, for example, 10 to 45 degrees Celsius. The thermally treated first ceramic powder may also be naturally cooled at room temperature (20 to 25 degrees Celsius).

As described above, the operation of mixing the cooled first ceramic powder with porous second ceramic powder or water to prepare a first mixture is performed. The porous second ceramic powder or water may form a hollow portion having a vacuum inside by forming and evacuating pores in a subsequent operation.

The porous second ceramic powder may be the same as or different from the first ceramic powder. For example, the porous second ceramic powder may include at least one selected from the group consisting of $Al_2O_3$, $SiO_2$, $ZrO_2$, and SiC.

Next, an operation of pulverizing the first mixture is performed. The pulverizing operation may be performed in various manners such as a ball milling and a jet milling, and may be performed using, in detail, ball milling.

As described above, an average particle size of the ceramic material according to the present disclosure may be 10 nm to 5 um, and a sieving operation may be additionally performed such that the ceramic material has the above-mentioned average particle size. The sieving operation is not limited and may be performed in a manner well known in the art. For example, the sieving operation may be performed by passing particles through a mesh, or using a vibrating screen.

After the pulverization operation is performed, an operation of removing impurities may be additionally performed. The impurity removal may be performed by a manner well known in the art. For example, when the impurity is a metal, the impurity remove may be performed using magnetic force.

The pulverized first mixture, the doping material, and the curable resin are mixed to form a second mixture, and a curing accelerator may be added, as necessary. The second mixture is evacuated in a vacuum. In this case, the evacuation may be performed at vacuum degree of 0 to 760 mmHg or under an ultrasonic vacuum condition of 1000 to 5000 Hz. For example, when the evacuation is performed under the ultrasonic vacuum condition, a vacuum rate may be increased and internal bubbles may be effectively removed.

The evacuation may be performed in a stepwise manner. For example, the evacuation may be performed for 10 minutes to 2 hours in a high-vacuum condition ($10^{-3}$ mmHg to $10^{-7}$ mmHg) and may then be performed for 30 to 4 hours in a medium-vacuum condition (1 mmHg to $10^{-3}$ mmHg) . The stepwise evacuation may be more effective than a continuous vacuum process. To achieve stabilization, there may be a rest time of about 5 seconds to about 10 seconds between respective steps of the stepwise evacuation.

A ceramic composite is prepared by curing the second mixture evacuated in a vacuum at a temperature of 150 to 300 degrees Celsius.

Then, the prepared ceramic composite is applied to at least one surface of the porous polymer substrate and dried to prepare a separator for a secondary battery. In this case, the ceramic composite may form a ceramic layer, and the ceramic layer may be adhered and fixed to the porous polymer substrate through the above-described binder.

As described above, since the ceramic composite includes a hollow portion in a vacuum state, the separator according to the present disclosure may exhibit improved thermal insulation and heat resistance. Furthermore, since the ceramic composite includes a doping material, the separator according to the present disclosure may exhibit improved ductility. Thus, damage to the separator substrate may be prevented during the preparation of the separator, or damage to the electrode may be prevented during manufacturing of the battery.

The separator according to the present disclosure can be applied to a secondary battery. The secondary battery includes a positive electrode, a negative electrode, and the above-described separator. In this case, the positive electrode and the negative electrode are not limited as long as they are known in the art.

Example

Inventive Examples 1 and 2 and Comparative Examples 1 and 2

(1) Preparation of ceramic composite

As a ceramic material, $Al_2O_3$ powder was thermally treated at a temperature of 1800 degrees Celsius and then cooled at a temperature of 25 degrees Celsius in an air-cooling manner. The $Al_2O_3$ powder, which was thermally treated and then cooled, and $Al_2O_3$ powder, which was not thermally treated, were mixed to prepare a first mixture.

Then, the first mixture was pulverized by a ball milling method to have an average particle size of 100 nm, and 100 g of the pulverized first mixture, 5 g of polyurethane, 2 g of polyester, 1 mg of benzoyl peroxide, and 3 mg of cyclohexanone peroxide were mixed to prepare a second mixture. The second mixture was evacuated under vacuum conditions, and was then cured at a temperature of 300 degrees Celsius to prepare a ceramic composite.

(2) Manufacturing of separator

100 g of the prepared ceramic composite was mixed with 5 g of styrene-butadiene rubber, an aqueous binder, and then dried at a temperature of 100 degrees Celsius. The ceramic composite, to which the binder is attached, was applied to opposite surfaces of porous polyethylene (PE) having an average thickness of 10 nm, and was then dried to manufacture a separator including a ceramic layer having a thickness listed in Table 1.

(3) Manufacturing of secondary battery

94 wt% of $LiCoO_2$ as a positive electrode active material, 2.5 wt% of polyvinylidene fluoride as a coalescing agent, and 3.5 wt% of carbon black as a conductive agent were added to N-methyl pyrrolidone as a solvent such that a solid content was 50 wt%, and were stirred to prepare uniform positive electrode slurry. The positive electrode slurry was coated, dried, and compressed on an aluminum foil having a thickness of 30 um to prepare a positive electrode plate having a thickness of 150 $\mu$m.

Then, 95 wt% of artificial graphite as a negative electrode active material, 3 wt% of acrylic latex having a $T_g$ of -52 degrees Celsius as a coalescing agent, and 2 wt% of carboxymethyl cellulose as a thickener were added such that a solid content was 48 wt% in water, a solvent, and were then stirred to prepare a uniform negative electrode slurry. The negative electrode slurry was coated, dried and compressed on a copper foil having a thickness of 20 $\mu$m to prepare

a negative electrode plate having a thickness of 150 μm.

A pouch-type battery was assembled in a stacking manner using the prepared separator between the positive electrode and the negative electrode prepared as above. An electrolyte, in which ethylene carbonate/ethyl methyl carbonate/dimethyl carbonate having a volume ratio of 25:45:30 were dissolved in 1M of lithium hexafluorophosphate (LiPF6), was injected into the assembled battery to manufacture a lithium secondary battery.

Comparative Example 3

A secondary battery was manufactured in the same manner as in Inventive Examples 1 and 2 and Comparative Examples 1 and 2 except that a separator, not including a ceramic layer, was applied.

Comparative Example 4

A separator was manufactured by applying $Al_2O_3$ powder to opposite surfaces of porous polyethylene and then drying the applied $Al_2O_3$ powder. A secondary battery was manufactured in the same manner as in Inventive Examples 1 and 2 and Comparative Examples 1 and 2 using the above-mentioned separator.

Table 1

|  | Whether ceramic composite is included | Average thickness of substrate [μm] | Average thickness of ceramic layer [μm] |
|---|---|---|---|
| Inventive Example 1 | include | 10 | 5 |
| Inventive Example 2 | included | 10 | 10 |
| Comparative Example 1 | included | 10 | 1 |
| Comparative Example 2 | included | 10 | 20. |
| Comparative Example 3 | not included | 10 | 0 |
| Comparative Example 4 | not included | 10 | 5 |

Evaluation of physical properties

Porosity, cell capacity, cell resistance, maximum external temperature of a cell during internal short-circuit, and thermal runaway transfer time of the separators prepared in Inventive Examples and Comparative Examples were measured and are listed in Table 2.

(1) Porosity of separator (%)

Density $d_1$ of a porous separator and actual density $d_2$ of a separator were measured and calculated according to the following Equation 1.

$$\text{Equation 1: } d_1/d_2 \times 100$$

(2) Gurley value of separator

Time required for 100 ml of air to pass through a separator having a size 5 cm x 5 cm was measured.

(3) cell capacity

Charging: CCCV 4.2 V 1C-rate 0.05C-cut-off
Rest: 10 minutes
Discharge: CC 1C-rate 2.5 V cut-off
Rest: 10 minutes

Last discharge capacity after repeating above process three times

(4) Cell resistance

Charging: CCCV 4.2 V 1C-rate 0.05C-cut-off
Rest: 10 minutes
Discharging: CC 1C-rate 2.5 V cut-off
Rest: 10 minutes

Repeating above process three times

Charging: CCCV 4.2 V 1C-rate 0.05C-cut-off
Rest: 10 minutes
Discharge: CC 1C-rate SOC50% cut-off
Rest: 10 minutes
Discharge resistance: CC 4C-rate 10 sec cut-off

(5) Maximum external temperature of cell during internal short-circuit

With a safety test in which a positive electrode and a negative electrode are brought into contact with each other to cause short-circuit, a cell was locally pressurized to be short-circuited from the outside of the cell, and temperature at this time was measured.

(6) Thermal runaway transfer time

A secondary battery cell was overcharged by 1.5 times, and an ignition time of an adjacent cell was measured.

Table 2

|  | Porosity of separator 1961 | Gurley value of separator [sec/100ml] | Cell capacity [Ah] | Cell resistance [mQ] | Maximum external temperature of cell during internal short-circuit [°C] | Thermal runaway transfer time [min] |
|---|---|---|---|---|---|---|
| Inventive Example 1 | 50 | 300 | 90 | 1.05 | 100 | 10 |
| Inventive Example 2 | 50 | 350 | 80 | 1.15 | 70 | 20 |
| Comparative Example 1 | 50 | 250 | 99 | 1.01 | 150 | 2 |
| Comparative Example 2 | 50 | 400 | 70 | 1.3 | 60 | 40 |
| Comparative Example 3 | 50 | 230 | 100 | 1.0 | 200 | 1 |

(continued)

|  | Porosity of separator 1961 | Gurley value of separator [sec/ 100ml] | Cell capacity [Ah] | Cell resistance [mΩ] | Maximum external temperature of cell during internal short-circuit [°C] | Thermal runaway transfer time [min] |
|---|---|---|---|---|---|---|
| Comparative Example 4 | 50 | 300 | 90 | 1.1 | 150 | 2 |

Referring to Table 2, it can be seen that when the separator includes the ceramic composite as described in Examples 1 and 2, heat transfer may be effectively blocked in spite of generation of non-ideal heat inside a cell to manufacture a cell having improved thermal stability.

On the other hand, in the case of a cell to which the porous separator was applied alone as in Comparative Example 3, maximum external temperature in the cell was high during internal short-circuit, and heat was transferred within a small amount of time. In addition, in Comparative Example 4 to which a conventional ceramic layer was applied, although the ceramic layer had the same thickness as in Example 2, the maximum external temperature of the cell was increased during internal short-circuit and heat was transferred within a small amount of time.

It was seen that when an average thickness of a ceramic layer did not satisfy the scope of the present disclosure, the maximum external temperature of the cell was high during an internal short circuit and heat was transferred within a small amount of time (Comparative Example 1), or cell capacity was low and cell resistance is high (Comparative Example 2).

As described above, a separator for a secondary battery includes a ceramic composite in which a hollow portion is in a vacuum state, so that non-ideal heat generated by an electrode active material may be prevented from transferring to the inside of an electrode and thermal runaway may be prevented.

**Claims**

1.  A separator for a secondary battery, the separator comprising:

    a porous polymer substrate and a ceramic layer provided on at least one surface of the porous polymer substrate, wherein
    the ceramic layer includes a ceramic composite,
    the ceramic composite comprises:

    a hollow portion;
    a ceramic shell surrounding the hollow portion; and
    a doping material dispersed in the ceramic shell, and the hollow portion is in a vacuum state.

2.  The separator of claim 1, wherein the ceramic shell includes at least one ceramic material selected from the group consisting of $Al_2O_3$, $SiO_2$, $ZrO_2$, and SiC.

3.  The separator of any of claims 1 or 2, wherein an average thickness of the ceramic shell is 1 nm to 1 μm.

4.  The separator of any of claims 1 to 3, wherein the doping material includes at least one selected from the group consisting of polyurethane (PU) and polytetrafluoroethylene (PTFE),
    wherein a content of the doping material is 5 to 10 weight percentage (wt%) based on a total weight of the ceramic shell.

5.  The separator of any of claims 1 to 4, wherein the ceramic shell further includes at least one curable resin selected from the group consisting of a polyester resin and a polyimide resin.

6.  The separator of claim 5, wherein a content of the curable resin is 1 to 15 weight percentage (wt%) based on a total weight of the ceramic shell.

7.  The separator of any of claims 1 to 6, wherein the ceramic composite has flexural strength of 10 to 20 MPa.

8.  The separator of any of claims 1 to 7, wherein an average particle size of the ceramic material is 10 nm to 5 μm.

9. The separator of any of claims 1 to 8, wherein an average thickness of the ceramic layer is 5 to 10 $\mu$m.

10. The separator of any of claims 1 to 9, wherein the porous polymer substrate includes polyethylene (PE) or polypropylene (PP) .

11. The separator of any of claims 1 to 10, wherein the ceramic layer further includes a binder having a content of 1 to 5 weight percentage (wt%) based on a total weight of the ceramic layer.

12. The separator of claim 11, wherein the binder includes at least one selected from the group consisting of styrene-butadiene rubber (SBR), carboxymethyl cellulose (CMC), and polyvinylidene fluoride (PVDF).

13. A method of manufacturing a separator for a secondary battery, the method comprising:

thermally treating first ceramic powder at a temperature of 1800 to 2200 degrees Celsius;
cooling the thermally treated first ceramic powder;
mixing the cooled first ceramic powder with porous second ceramic powder or water to prepare a first mixture;
pulverizing the first mixture;
mixing the pulverized first mixture, a doping material, and a curable resin to prepare a second mixture;
evacuating the second mixture in a vacuum;
curing the second mixture, evacuated in the vacuum, at a temperature of 150 to 300 degrees Celsius to prepare a ceramic composite; and
applying the ceramic composite to at least one surface of the porous polymer substrate and then drying the applied ceramic composite.

14. The method of claim 13, wherein each of the first ceramic powder and the porous second ceramic powder includes at least one selected from the group consisting of $Al_2O_3$, $SiO_2$, $ZrO_2$, and SiC.

15. A secondary battery comprising:

a positive electrode;
a negative electrode; and
a separator for a secondary battery according to any of claims 1 to 12.

<u>100</u>

30

20

10

FIG. 1